# EUROPEAN PATENT APPLICATION

(11) **EP 3 771 691 A1**
(43) Date of publication of application: **03.02.2021**
(21) Application number: 20177490.8
(22) Date of filing: 29.05.2020
(51) Int. Cl.: C02F 1/28, B01D 35/30

(54) **WATER TREATMENT APPARATUS**

(30) Priority: 29.07.2019 DK PA201900906
(71) Applicant: Guldager A/S, 3450 Allerød (DK)
(72) Inventor: LUNDBERG, Carsten, 3450 Allerød (DK)
(74) Representative: Plougmann Vingtoft a/s

(57) **Abstract**

The present invention relates to a water treatment apparatus (1) comprising a housing (40) comprising a water distribution system and one or more treatment elements (45) for treating water. The apparatus comprises a base member (10) comprising a first base part (20) and a second base part (30), where the first base part is adapted to be attached to the housing and comprises at least one inlet channel (21) and at least one outlet channel (22) adapted to establish fluid communication between an opening into the interior of the housing and the second base part. The second base part comprises at least one inlet channel (31) for supplying un-treated water from a first water supply conduit (2) to the housing via the inlet opening (38) and at least one outlet channel (32) for receiving treated water from the housing and delivering the treated water via the outlet opening (39) to a second water supply conduit (7). The first base part and the second base part are adapted for engagement and to be locked together by means of a locking device (36), such as a snap lock device.

## Description

### TECHNICAL FIELD

The present invention relates to a water treatment apparatus comprising a housing and a base member for connection to a supply of water to be treated, wherein the housing and at least parts of the base member can be releasably engaged.

### BACKGROUND

Water treatment apparatuses comprising interchangeable filter cartridges, e.g. cartridges filled with an ion exchange material, are well known. A typical water treatment apparatus is configured to remove pathogens, chemical contaminants and turbidity from water. A wide variety of treatment mechanisms are employed in conventional water treatment apparatuses. Many conventional water treatment methods can be broadly classified as either solid separation using physical processes and/or chemical processes, including the use of chemical additives. For example, conventional water treatment apparatuses often include carbon filtration, non-carbon filtration, distillation, ozone treatment, reverse osmosis, ion exchange components, chlorination components, aeration components, advanced oxidation process components, coagulation components, and/or sedimentation components. The filter cartridges are normally connected inline into a water conduit by a connector head. Today the filter cartridges are widely used in the catering sector, but also in private households for e.g. descaling and for machines for hot beverage preparation, such as coffee machines. A widely used design of a filter cartridge is a design where the filter cartridge is provided with a connection head having an inlet and an outlet port for water, which inlet and outlet ports are connected to a water conduit.

However, in conventional filter cartridges known from practice, the connection head comprising the inlet and outlet ports is usually formed as an integral component of the housing of the filter cartridge. If the water ports provided at the installation location, in particular the connection portions of a supply hose and a drain hose, do not fit the ports of the filter cartridge, use of a suitable adapter is required, which is usually cumbersome and expensive to mount.

Moreover, it may be difficult to mount the adaptor and fasten screw connections in confined spaces. Many conventional water treatment apparatuses include consumable water treatment components that must be replaced over time, such as e.g. replaceable carbon filters and ion-exchange filters. However, it may also be difficult to replace the filter cartridges, and normally tools and a trained operator are required to replace the filter cartridges, and, consequently, it is desirable to provide a water treatment system in which it is easy for the operator to remove and replace the filter cartridges.

### DISCLOSURE OF THE INVENTION

An object of the present invention is to provide a water treatment apparatus where the standard filter cartridges may be easily replaced without the use of tools.

A further object is to provide a water treatment apparatus where the user can replace the standard filter cartridges in an easy manner, and where the standard filter cartridges can be re-used or recharged.

An object of some embodiments of the invention is to provide a water treatment apparatus that both provide tool-less replacement, rechargeable equality as well as bypass adjustment possibility.

It is a further object of some embodiments of the invention to provide a water treatment apparatus that allows for the supply of treated water to more than one equipment.

These and other objects have been solved by the invention as defined in the claims and as described herein below.

It has been found that the invention and embodiments thereof have a number of additional advantages, which will be clear to the skilled person from the following description.

The water treatment apparatus can be used for treatment of all kinds of water, including drinking water.

The invention relates to a water treatment apparatus comprising:
- a housing comprising a water distribution system and one or more treatment elements for treating water flowing through the apparatus, when in use, and
- a base member comprising a first base part and a second base part,
said first base part being adapted to be attached to an opening into the interior of said housing and comprising at least one inlet channel and at least one outlet channel adapted to establish fluid communication between the interior of said housing and the second base part,
said second base part comprising at least one inlet channel for supplying un-treated water from a first water supply conduit to the interior of said housing via at least one inlet opening and at least one outlet channel for receiving treated water from the interior of said housing and delivering the treated water via the at least one outlet opening to a second water supply conduit,
wherein the first base part and the second base part are adapted for mutual engagement and for being locked together by means of a locking device, such as a snap lock device, such that the first base part can be connected to the second base part by engagement of the locking device, such that the at least one inlet channel in the second base part is in fluid communication with the interior of the housing via the at least one inlet channel in the first base part, and the at least one outlet channel in the second base part is in fluid communication with the interior of the housing via the at least one outlet channel in the first base part when the first base part is attached to the housing.

Thus, the housing comprising the water treatment elements is connected to a water conduit by a base member comprising two parts. In principle, the housing can be seen as a filter cartridge, however, in this context it is referred to as a housing. The first base part is connected to the housing as an intermediate part establishing at least one inlet channel and at least one outlet channel between the interior of the housing (the filter and water treatment elements) and the exterior.

The second base part is inserted in a water conduit, and the part of the water conduit providing the untreated water is referred to as the first water supply conduit, and the part of the water conduit to which the treated water is delivered is referred to as a second water supply conduit. The second base part delivers untreated water to the interior of the housing and receives treated water from the interior of the housing via the first base part. The untreated water enters the water treatment apparatus via the inlet channel in the second base part, and treated water leaves the water treatment apparatus via the outlet channel in the second base part. The treated water is transported to the place of use by the second water supply conduit.

The first base part and the second base part can be releasably connected by the locking device allowing the housing and the first base part to be removed from the second base part, e.g. for replacement of the housing while leaving the second base part in place.

The second base part can remain installed in the water conduit for longer terms, such as several years. The second base part can be connected to the water conduit by means of conventional plumber equipment.

The first base part and the second base part are assembled by the locking device, such as a snap lock device, which has the advantage that it can be operated simply by hand and does not require tools or specially trained operators. Suitable gaskets can be used in the connection portions between the first and the second base parts.

When the first and second base parts are connected, a surface of the first base part is contacting a surface of the second base part such that the inlet and outlet channels in the first and second base parts are in fluid communication.

The snap locking device is to be understood as a locking device which can be easily handled by hand without the need of tools and provides a safe and tight locking between the parts. The snap locking device may e.g. be constituted by spring-loaded clamps, a bayonet socket or a swivel nut coupling, which all allow for easy assembling of the first and second base parts to form the base member without the need for tools.

Alternatively, a snap locking device can be understood as a device which is fastened automatically when pushed into position.

The first base part and the second base part can be equipped with suitable guiding means, which ensure that the parts will be assembled correctly in relation to each other, i.e. such that the corresponding water channels in the first and second base part are in fluid communication.

In a preferred embodiment, the locking device is designed such that the first base part comprises a first treaded portion for engagement with a swivel nut rotatably mounted on the second base part, such that the first base part can be connected to the second base part by engagement between the swivel nut and the first treaded portion. The use of a swivel nut coupling or connection as the locking device allows for an easy and firm connection between the first base part and the second base part without use of tools.

Although the first base part may be permanently attached to the housing, the invention also provides an embodiment where the first base part is releasably attached to the housing e.g. by use of a second threaded connection. Thus, the first base part can be released and reused together with the second base part. The housing can be equipped with a lid, and the filter or filters and other treatment elements in the housing can be regenerated and the housing can be reused.

The parts of the water treatment apparatus can be manufactured from any suitable material, such as polymer material or metallic material or a combination of polymer material and metallic material. The polymer material can e.g. be selected from polypropylene, polyethylene, polyamide, and poly vinylidene fluoride.

In an embodiment of the water treatment apparatus, the apparatus comprises a bypass providing for a fluid communication between the first water supply and the second water supply allowing water to bypass the interior of the housing. Many water treatment systems comprise a bypass, which normally is a hole drilled between an inlet and an outlet channel.

According to an embodiment of the water treatment apparatus, the bypass is provided as a bypass channel in the first base part and/or in the second base part. The bypass may be a hole provided in the first base part from a lower surface to an upper surface and with a center axis substantially parallel with the center axis of the inlet channel and the outlet channel. In an embodiment, the bypass is adjustable. The adjustable bypass can be obtained by insertion of nozzles in the bypass hole. By insertion of nozzles of varying sizes, the amount of water bypass can be selected to be e.g. in the range of 0 to 70 %. Thus, water in an amount up to 70 % can bypass in the water treatment system. With other nozzles, the possible bypass may be larger, if desired for a given application. The choice of the amount of water bypassing the water treatment that takes place in the interior of the housing may typically be a compromise between different requirements, such as protection against scaling and influence on the taste of the water.

In an embodiment of the invention, the bypass is in fluid communication with the outlet opening and/or the outlet channel. The fluid communication between the bypass and the outlet opening and/or the outlet channel can be established by a recess between the bypass hole and the outlet opening and/or the outlet channel in the upper surface of the first base part.

The embodiment of the invention having a bypass hole in the first base part has the advantage that untreated water is led to the upper part of the housing where it is treated in a carbon filter before it leaves the housing via the bypass. In this manner, the bypassed water is not entirely untreated but has passed the carbon filter which removes impurities and improves the turbidity of the water. Moreover, the carbon filter may also remove a number of heavy metals and substances influencing the smell and taste of the water.

In some embodiments of the invention, the base member comprises an inner compartment adapted to contain a coal filter, the inner compartment being in fluid communication with the at least one inlet channel and the at least one outlet channel.

In some embodiments of the invention, the second base part comprises:
- a main body which is provided with two or more main body channels each extending from a top surface of the main body and towards the inner compartment and/or towards an inlet channel or outlet channel in the first base part,
- a bottom plate arranged below and in fluid-tight engagement with the main body, so that the inner compartment is formed by the main body and the bottom plate,
- two or more rotatable valves each having an inner valve channel forming a flow path into or out of the water treatment apparatus, the valves being shaped, dimensioned and arranged in relation to the main body channels so that the rotational orientations of the valves in relation to the main body channels determine the possible flow of water into, through and out of the apparatus.

In such embodiments having rotatable valves, at least some, such as each, of the valves may be provided with an adjuster, such as an adjustment screw, adapted to facilitate manual and individual rotation of the valves and thereby control the possible flow of water.

Furthermore, in embodiments having a bottom plate, the bottom plate may comprise a distribution region having distribution channels adapted to ensure that water entering the inner compartment flows towards the whole or substantially the whole of the distribution region.

In any of the embodiments as described above, at least some of the parts being in mutual engagement may be provided with mating protrusions and indentations to facilitate a correct assembly of the apparatus.

In an embodiment of the water treatment apparatus, the housing has a substantially cylindrically shaped wall with a top portion and a bottom portion, and the water distribution system comprises a tube extending substantially from the top portion to the bottom portion substantially parallel with the cylindrically shaped wall. The top portion is normally closed by the first base part, and the tube is connected to the outlet channel in the first base part. Thus, water entering the housing via the inlet channel in the first base part (and which does not leave the housing via the bypass) will move from the top portion to the bottom portion through the water treatment elements present in the housing and be collected by the tube and led to the outlet channel as treated water. In other embodiments of the invention, the untreated water is supplied to the interior of the housing at the lower end thereof, typically by use of a tube, so that the treatment takes place while the water rises towards an outlet arranged at the upper end of the housing.

In the water treatment apparatus according to the invention, the housing preferably comprises a carbon filter. In some embodiments of the invention, the carbon filter is placed in the top portion of the housing in the vicinity of the lower surface of the first base part. In alternative embodiments, the carbon filter is arranged in a compartment of the base member. The carbon filter may remove particles with a size above 5 µm, heavy metals and it may affect the taste and smell of the water.

In an embodiment of the water treatment apparatus, the treatment elements for treating water comprise elements selected from softening resin, UniScale catalyst, dolomite or granulate, and other filter materials. Thus, the water treatment apparatus provides the possibility of a large range of water treatments.

In an embodiment, the water treatment apparatus further comprises an electronic component for controlling and monitoring the function of the apparatus. The electronic component may e.g. monitor the flow of water through the apparatus, the condition of the water treatment elements, and whether they need to be replaced.

The electronic component may communicate wirelessly with a central control unit, and e.g. send a signal to the central control unit, if the housing needs to be replaced to maintain the function of the water treatment apparatus.

### DETAILED DESCRIPTION OF THE INVENTION

The invention will now be described in further details with reference to preferred embodiments shown in the drawings in which:
Figure 1 shows an embodiment of a water treatment apparatus according to the invention;
Figure 2 shows an exploded three-dimensional view of the base member of the water treatment apparatus in figure 1;
Figure 3 shows the housing of the embodiment in figure 1;
Figure 4a shows the second base part of the base member in figure 2 seen from below;
Figure 4b shows the first base part of the base member in figure 2 seen from above;
Figure 5 shows a cross-sectional view of the base member in figure 2;
Figure 6 shows a base member according to another embodiment of the invention;
Figure 7 shows a cross-sectional view of the base member in figure 6;
Figure 8 shows a bottom view of the base member in figure 6 with the swivel nut removed and with the bottom plate arranged at a distance from the main body;
Figure 9 shows an exploded view of the base member in figure 6;
Figure 10 shows a valve for use in the base member in figure 6;
Figure 11 shows an adjustment screw for use with the valve in figure 10;
Figure 12 shows a top view of the base member in figure 6 with the top cover removed;
Figure 13 shows a top view of the main body of the base member in figure 6; and
Figure 14 shows a bottom view of the valve in figure 10.

The figures are not accurate in every detail but only sketches intended to show the principles of the invention. Details which are not a part of the invention may have been omitted. In the figures, the same reference signs are used for the same parts.

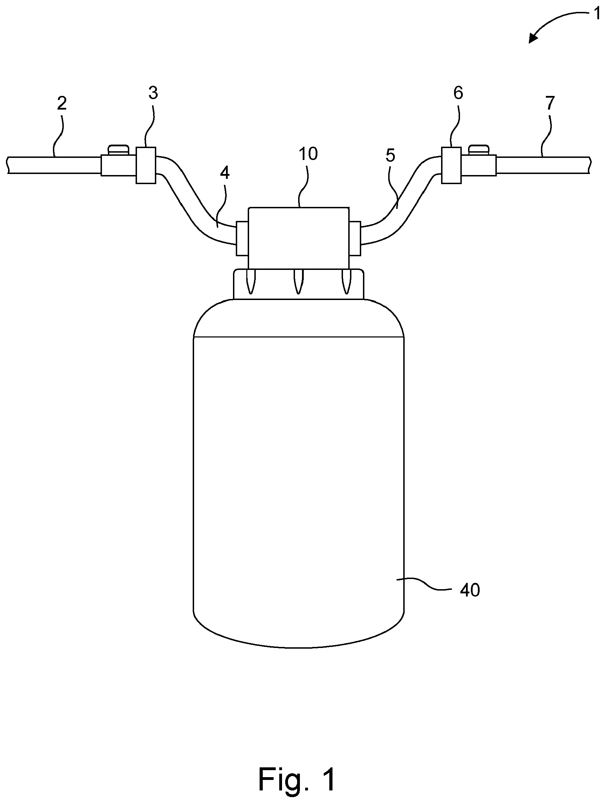

Figure 1 shows an embodiment of a water treatment apparatus 1 according to the invention. The base member 10 of the apparatus 1 is via a valve connection 3 and a first water supply hose 4 connected with a first water supply conduit 2. The base member 10 is also connected to a second water supply conduit 7 via a valve connection 6 and second water supply hose 5.

The first water supply conduit 2 delivers un-treated water to the apparatus 1 and the second water supply conduit 7 receives the treated water from the apparatus. The first water supply conduit 2 and the second water supply conduit 7 do not form part of the system. In the water treatment apparatus 1, the treatment of the water is performed in the interior of the housing 40, which may contain several filters and water treatment devices.

The flow of water through the apparatus 1 can be controlled by the valves 3 and 6. Thus, by means of the valves 3 and 6, it is possible to close the water supply and replace the housing 40 with a new housing when the filters and water treatment devices are worn out or need regeneration.

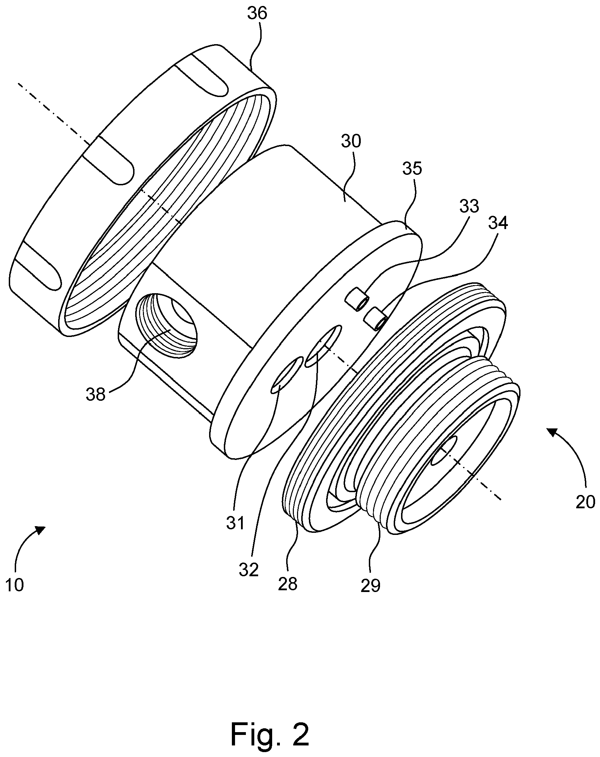

Figure 2 shows an embodiment of the base member 10 in more details. The base member 10 comprises a first base part 20 and a second base part 30. The first base part 20 comprises a first threaded portion 28, which allows for engagement with the swivel nut 36, thus allowing the first base part 20 and the second base part 30 to be assembled by the locking function of the swivel nut 36. The second base part 30 comprises a rim 35, which can engage with the swivel nut 36. The first base part 20 also comprises a second threaded portion 29 by which the first base part 20 can be attached to the housing 40.

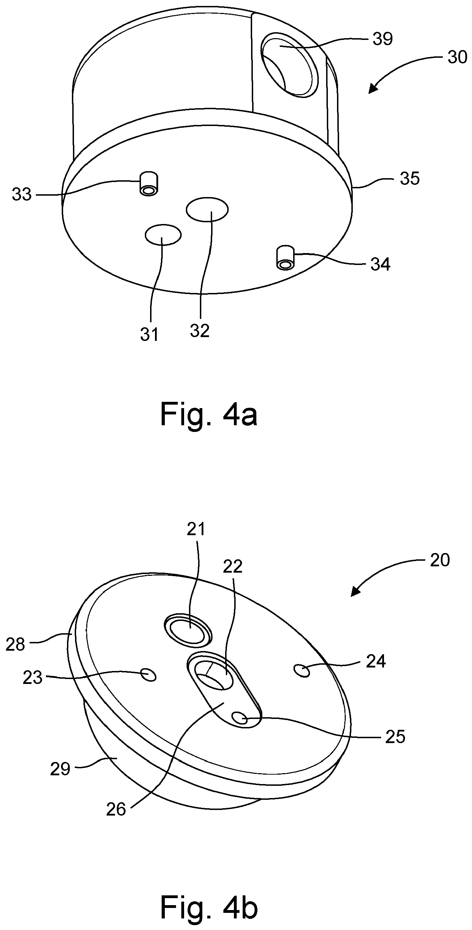

The second base part 30 comprises an inlet opening 38, which is in fluid communication with inlet channel 31 which again is in fluid communication with an inlet channel 21 in the first base part 20. Figure 2 also shows an outlet channel 32 in the second base part 30 which is in fluid communication with an outlet channel 22 (see figure 4b) in the first base part 20. Figure 2 also shows two protrusions 33, 34 in the second base part 30. These protrusions 33 and 34 can engage with matching indentations 23, 24 in the first base part 20 and allow precise connection between the two parts. The protrusions and indentations are more clearly seen in figures 4a and 4b.

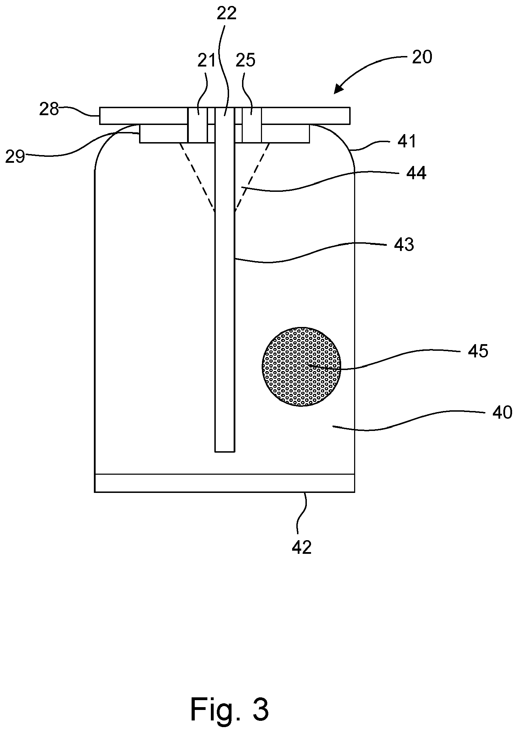

Figure 3 is a schematic depiction of the housing 40 having the first base part 20 attached to an opening into the interior of the housing. The housing 40 comprises a top part 41 and a bottom part 42. Inside the housing extending from the top part 41 to near the bottom part 42 is a tube 43. At the top part 41, the tube 43 is connected with an outlet channel 22 for treated water in the first base part 20 attached to the housing 40.

The first base part 20 also comprises an inlet channel 21 for un-treated water and a bypass channel 25.

In the embodiment in figure 3, a carbon filter 44 is mounted in the top part 41 of the housing 40 just below the first base part 20. The position of the carbon filter is indicated by dotted lines. Thus, water entering the housing 40 via the inlet channel 21 will always pass the carbon filter 44, before it continues down inside the interior of the housing 40 towards the bottom part 42 during which passage the water will pass other water treatment devices or water treatment elements as schematically indicated by 45. However, at least some of the water may also leave the housing 40 via the bypass channel 25; in this manner it will only pass the carbon filter 44.

The water portion which continues down towards the bottom part 42 and receives the full water treatment will be collected by the tube 43 and delivered as treated water to the outlet channel 22 in the first base part 20. The outlet channel 22 and the tube 43 are connected.

Figures 4a and 4b show embodiments of the first and second base parts 20 and 30 of the base member 10 in figure 2 in more details.

Figure 4a shows the second base part 30 comprising an inlet channel 31 in fluid communication with a not shown inlet opening (reference no. 38 in figure 2) and an outlet channel 32 in fluid communication with outlet opening 39. The second base part 30 also comprises two protrusions 33 and 34 adapted for engagement with indentations 23, 24 in the first base part 20; see figure 4b. The second base part 30 also comprises a rim 35 for engagement with a swivel nut 36 as explained above.

Figure 4b shows the first base part 20 with inlet channel 21 adapted to be in fluid communication with the inlet channel 31 in the second base part 30 when the base member 10 has been assembled. The first base part 20 also comprises an outlet channel 22 adapted to be in fluid communication with the outlet channel 32 in the second base part 30. The inlet channel 21 and the outlet channel 22 are also in fluid communication with the interior of the housing allowing passage of un-treated and treated water, respectively.

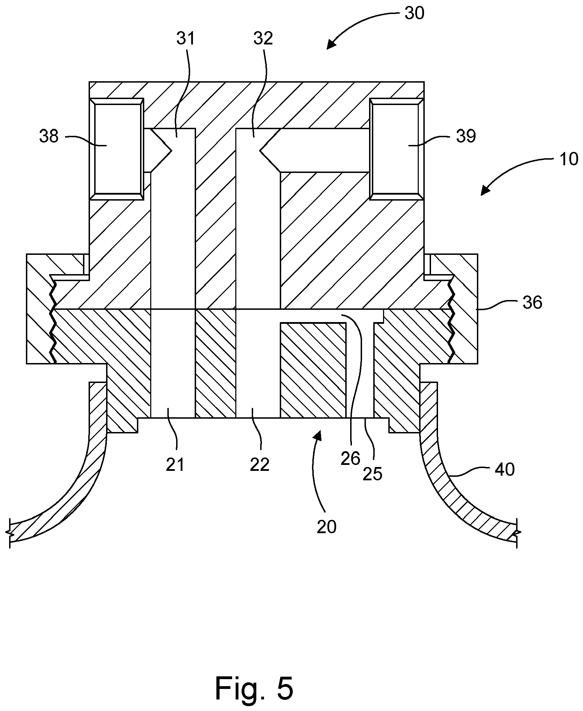

The first base part 20 also comprises a bypass channel 25 forming a conduit through the first base part 20 substantially parallel with the conduits of the inlet channel 21 and the outlet channel 22; see figure 5. Moreover, in the surface of the first base part 20 adapted for contact with the surface of the second base part 30, a recess 26 is formed between the outlet channel 22 and the bypass channel 25. During operation of the apparatus, the recess 26 serves to lead water from the bypass channel 25 to the outlet channel 22.

As mentioned, nozzles of varying sizes can be inserted into the bypass channel 25 allowing varying amounts of water to pass through.

As mentioned above, the first base part 20 also comprises indentations 23, 24 adapted for engagement with protrusions 33, 34 on the second base part 30. The engagement of the protrusions and indentations serve to ensure that the contacting surfaces of the first and the second base parts can be joined such that the inlet channels and outlet channels in the parts are aligned to allow for the desired flow of water through the water treatment apparatus.

Figure 5 shows in cross-sectional view the first base part 20 and the second base part 30 being in contact with contacting surfaces and forming the base member 10. The first base part 20, and thereby the second base part 30, are shown as being connected to the opening of the housing 40.

When the first base part 20 and the second base part 30 are in contact and held together by the swivel nut 36, the inlet channel 21 of the first base part 20 is in fluid communication with the inlet channel 31 of the second base part. Furthermore, the outlet channel 22 of the first base part 20 is in fluid communication with the outlet channel 32 of the second base part 30.

Moreover, the bypass channel 25 in the first base part 20 is in fluid communication with the outlet channels 22 and 32 via the recess 26 formed in the first base part 20.

Un-treated water can be led to the apparatus via inlet opening 38 and enter the opening into the interior of the housing 40 by passing inlet channels 31 and 21 in the second base part 30 and first base part 20, respectively. Water in the housing 40 can be led to the outlet opening 39 via the outlet channels 22 and 32, and, furthermore, via the bypass channel 25 and the recess 26 in fluid communication with the outlet channels 22 and 32.

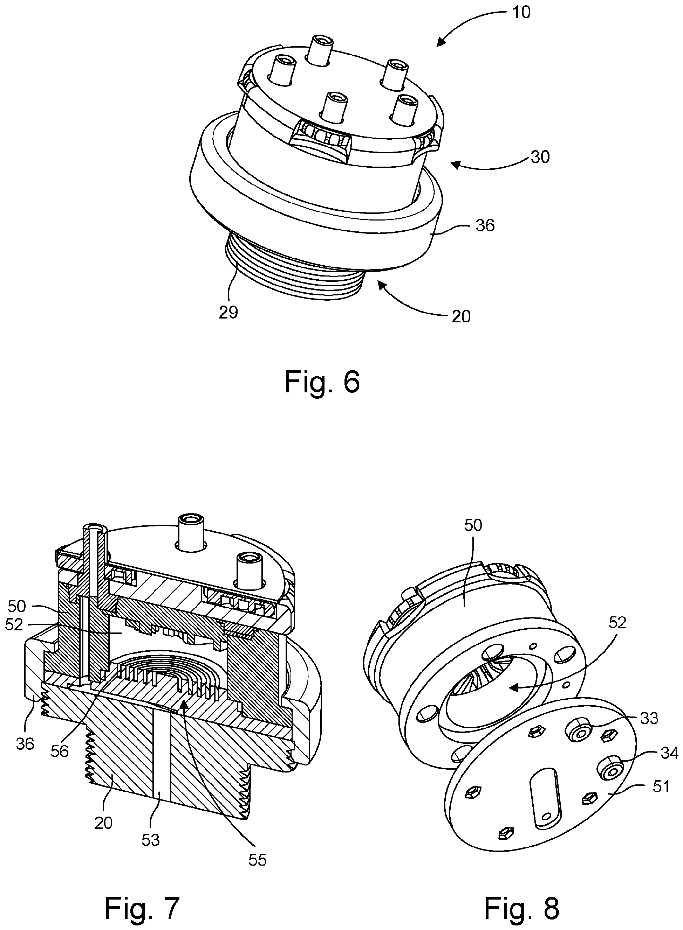

Figure 6 shows another embodiment of a base member 10 for a water treatment apparatus according to the invention. As for the embodiment described above, the base member 10 in figure 6 comprises a first base part 20 and a second base part 30 that are connected by use of a locking device in the form of a swivel nut 36. The first base part 20 has a second threaded portion 29 adapted for attachment to a housing 40.

For the embodiment shown in figures 6 to 14, when referring to the inlet and outlet channels in the description, no distinction is made between whether the respective channel is in the first base part or the second base part. This means that in the following "inlet channel" 53 can correspond to either inlet channel 21 or inlet channel 31 in the description of the embodiment in figures 1-5. Correspondingly, "outlet channel" 54 can correspond to either outlet channel 22 or outlet channel 32 in the description of the embodiment in figures 1-5. This makes sense, since in the assembled state, e.g. an inlet channel could be seen as one continuous inlet channel formed by the inlet channel in the second base part and the in the first base part.

Figure 7 shows a cross-sectional view of the base member 10 in figure 6. The second base part 30 comprises a main body 50 and a bottom plate 51 (see figure 8) arranged below and in fluid-tight engagement with the main body 50. In the assembled state shown in figure 7, an inner compartment 52 is formed by the main body 50 and the bottom plate 51. The inner compartment 52 is adapted to contain a coal filter (not shown) and thereby provides for an alternative arrangement thereof than the one shown in the above figures. Figure 8 shows the bottom plate 51 removed from the main body 50 to more clearly show the inner compartment 52. The inner compartment 52 is in fluid communication with the at least one inlet channel 53 and/or the at least one outlet channel 54 so that the water flowing through the base member 10 is led through the inner compartment 52 for treatment via the coal filter. In the illustrated embodiment, the bottom plate 51 comprises a distribution region 55 having distribution channels 56 adapted to ensure that water entering the inner compartment 52 flows towards the whole or substantially the whole of the distribution region 55. If desired for a given application of the water treatment apparatus 1, it would also be possible to insert other types of filters in the inner compartment 52.

In a water treatment apparatus 1 according to the invention, at least some of the parts being in mutual engagement are typically provided with mating protrusions and recesses to facilitate a correct assembly of the apparatus. An example of such protrusions 33,34 is shown on the lower surface of the bottom plate 51 in figure 8.

The main body 50 of the second base part 30 is provided with two or more main body channels each extending from a top surface of the main body 50 and towards the inner compartment 52 and/or towards an inlet channel 21 or outlet channel 22 in the first base part 20. By "top", reference is made to a typical orientation during use of the water treatment apparatus 1, wherein the opening of the housing 40 is facing upwards; i.e. as in the figures. A base member 10 according to this embodiment of the invention can be adapted to a given application depending on what is connected to the main body channels and thereby letting at least one of the main body channels form an inlet channel 53, and at least one of the main body channels form an outlet channel 54. If e.g. two of the main body channels are used as outlet channels 54, the water treatment apparatus 1 can be used to supply treated water to two different machines, such as two different types of coffee machines, or a coffee machine and a cold-water tap. It will also be possible to use one of the main body channels for ventilation, such as for pressure equalization before removal of the housing 40.

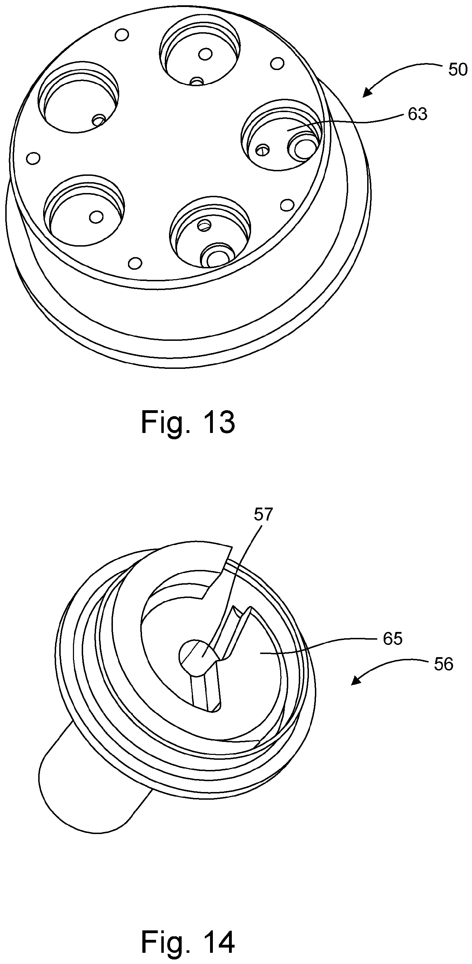

The embodiment in figure 6 and the following figures comprises five rotatable valves 56 each having an inner valve channel 57, see figure 14, forming a flow path into our out of the water treatment apparatus 1. Other numbers of valves 56 than five are also covered by the scope of the invention. The valves 56 are shaped, dimensioned and arranged in relation to the main body channels 53,54 so that the rotational orientations of the valves 56 in relation to the main body channels 53,54 determine the possible flow of water into, through and out of the apparatus as will be explained in further details below.

The connections between the water treatment apparatus 1 and this embodiment of the invention and the first and second water supply conduits 2,7 (see figure 1) can be made by couplings (not shown) adapted for connection directly to the upper ends of the valves 56. Hereby the valve connections 3, 6 of the embodiment in figure 1 can be built into the water treatment apparatus by having the couplings establishing the connections.

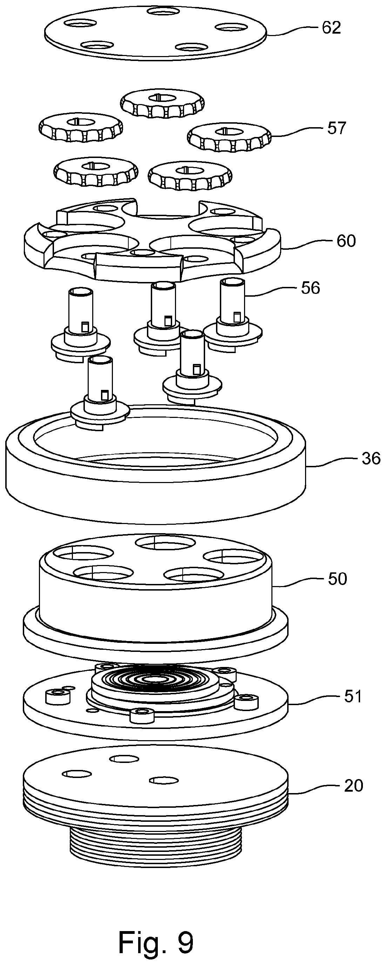

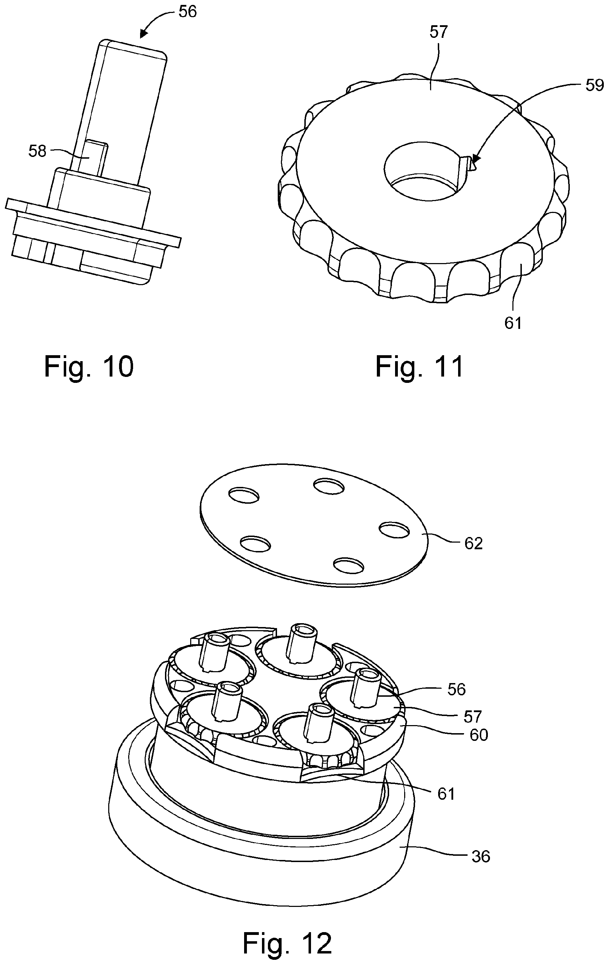

An exploded view of the base member 10 is shown in figure 9 in order to more clearly illustrate the individual elements. Each of the valves 56 is provided with an adjuster which in the illustrated embodiment is in the form of an adjustment screw 57 that is adapted to facilitate manual and individual rotation of the valves 56 and thereby control the possible flow of water. As more clearly seen in figures 10-12, the rotational engagement between a valve 56 and the corresponding adjustment screw 57 can be ensured by a valve protrusion 58 on the outer surface of the valve 56 and a matching adjustment screw recess 59 on the inner surface of the adjustment screw 57. Hereby a good engagement is ensured without the need for e.g. a press fit.

The second body part 30 further comprises a holding plate 60 which is used to keep the valves 56 in the desired positions as shown in figure 12. The holding plate 60 is provided with peripheral cutouts 61 providing manual access to the edges of the adjustment screws 57. A top cover 62 is arranged on top of the holding plate 60 to keep the adjustment screws 57 in place. The top cover 62 may be provided with information, such as a logo or information related to the use of the base member 10.

The use of the base member 10 in figures 6-12 in a water treatment apparatus 1 according to the invention will now be further described with reference to figures 13 and 14. Figure 13 is a top view of the main body 50, and figure 14 is a bottom view of a valve 56 to be arranged in one of the valve recesses 63 on the main body 50. At least some of the valve recesses 63 have two main body channels 53,54 extending therefrom of which one is a bypass channel and one is an inlet 53 or an outlet channel 54. When the valve is arranged in such a valve recess 63, the rotational orientation of that valve 56 will determine what is covered by the valve engagement surface 65 of the valve 56. This rotational position of the valve 56 will then determine how large a fraction of the water flowing through the valve channel 57 is led through the bypass channel and thereby does not flow through the housing 40. Hereby it is e.g. possible to adjust the water hardness to match a desired value taking into account a compromise between the taste of the water and a desire to avoid scale deposits in a machine connected to the water treatment apparatus.

If desired, one of the valves 56 can in combination with matching channels in the first and second base parts 20,30 be used for pressure equalization between the interior of the housing 40 and the atmosphere.

As it will be realized by the skilled person, several other embodiments of the invention is possible. The base member and the housing may e.g. have different shapes than shown in the examples above. Moreover, the first base part and the second base part may also be assembled by snap lock devices differing from what is shown in the examples, e.g. spring-loaded clamps or bayonet sockets.

## Claims

1. A water treatment apparatus (1) comprising:
- a housing (40) comprising a water distribution system and one or more treatment elements (45) for treating water flowing through the apparatus (1), when in use, and
- a base member (10) comprising a first base part (20) and a second base part (30),
said first base part (20) being adapted to be attached to an opening into the interior of said housing (40) and comprising at least one inlet channel (21,53) and at least one outlet channel (22,54) adapted to establish fluid communication between the interior of said housing (40) and the second base part (30),
said second base part (30) comprising at least one inlet channel (31,53) for supplying un-treated water from a first water supply conduit (2) to the interior of said housing (40) via at least one inlet opening (38) and at least one outlet channel (32,54) for receiving treated water from the interior of said housing (40) and delivering the treated water via at least one outlet opening (39) to a second water supply conduit (7),
wherein the first base part (20) and the second base part (30) are adapted for mutual engagement and for being locked together by means of a locking device (36), such as a snap lock device, such that the first base part (20) can be connected to the second base part (30) by engagement of the locking device (36), such that the at least one inlet channel (31,53) in the second base part (30) is in fluid communication with the interior of the housing (40) via the at least one inlet channel (21,53) in the first base part (21), and the at least one outlet channel (22,54) in the second base part (30) is in fluid communication with the interior of the housing (40) via the at least one outlet channel (22,54) in the first base part (20) when the first base part (20) is attached to the housing (40).

2. A water treatment apparatus (1) according to claim 1, wherein the locking device (36) is designed such that the first base part (20) comprises a first treaded portion (28) for engagement with a swivel nut (36) rotatably mounted on the second base part (30), such that the first base part (20) can be connected to the second base part (30) by engagement between the swivel nut (36) and the first treaded portion (20).

3. A water treatment apparatus (1) according to claim 1 or 2, wherein the first base part (20) is releasably attached to the housing (40).

4. A water treatment apparatus (1) according to any one of the proceeding claims, wherein the apparatus (1) comprises a bypass (25) providing for a fluid communication between the first water supply conduit (2) and the second water supply conduit (7) allowing water to bypass the interior of the housing (40).

5. A water treatment apparatus (1) according to claim 4, wherein the bypass (25) is provided as a bypass channel (25) in the first base part (20) and/or in the second base part (30).

6. A water treatment apparatus (1) according to any one of the preceding claims, wherein the base member (10) comprises an inner compartment (52) adapted to contain a coal filter (44), the inner compartment (52) being in fluid communication with the at least one inlet channel (53) and the at least one outlet channel (54).

7. A water treatment apparatus according to claim 6, wherein the second base part (30) comprises:
- a main body (50) which is provided with two or more main body channels (53,54) each extending from a top surface of the main body (50) and towards the inner compartment (52) and/or towards an inlet channel (21,53) or outlet channel (22,54) in the first base part (20),
- a bottom plate (51) arranged below and in fluid-tight engagement with the main body (50), so that the inner compartment (52) is formed by the main body (50) and the bottom plate (51),
- two or more rotatable valves (56) each having an inner valve channel (57) forming a flow path into or out of the water treatment apparatus (1), the valves (56) being shaped, dimensioned and arranged in relation to the main body channels (53,54) so that the rotational orientations of the valves (56) in relation to the main body channels (53,54) determine the possible flow of water into, through and out of the apparatus (1).

8. A water treatment apparatus (1) according to claim 7, wherein at least some, such as each, of the valves (56) are/is provided with an adjuster, such as an adjustment screw (57), adapted to facilitate manual and individual rotation of the valves (56) and thereby control the possible flow of water.

9. A water treatment apparatus (1) according to claim 7 or 8, wherein the bottom plate (51) comprises a distribution region (55) having distribution channels (56) adapted to ensure that water entering the inner compartment (52) flows towards the whole or substantially the whole of the distribution region (55).

10. A water treatment apparatus (1) according to any one of the preceding claims wherein at least some of the parts being in mutual engagement are provided with mating protrusions (33,34) and indentations (23,24) to facilitate a correct assembly of the apparatus (1).

11. A water treatment apparatus (1) according to any one of the proceeding claims, wherein the housing (40) has a substantially cylindrically shaped wall with a top portion (41) and a bottom portion (42) and the water distribution system comprises a tube (43) extending substantially from the top portion (41) to the bottom portion (42) substantially parallel with the cylindrically shaped wall.

12. A water treatment apparatus (1) according to any one of the proceeding claims, wherein the housing (40) comprises a carbon filter (44), and preferably one or more treatment elements (45) for treating water comprising elements selected from resin, UniScale catalyst, dolomite or granulate filter materials.

13. A water treatment apparatus (1) according to any one of the proceeding claims, wherein the apparatus (1) further comprises an electronic component for controlling and monitoring the function of the apparatus (1).

14. A water treatment apparatus (1) according to claim 13, wherein the electronic component is adapted for wireless communication with a central control unit.
